# EUROPEAN PATENT APPLICATION

(11) **EP 2 008 859 A1**
(43) Date of publication of application: **31.12.2008**
(21) Application number: 08158830.3
(22) Date of filing: 24.06.2008
(51) Int. Cl.: B60K 37/02

(54) **A Removable and Customizable Panel Module**

(30) Priority: 25.06.2007 US 767910
(71) Applicant: Faurecia Interior Systems U.S.A., Inc., Auburn Hills, MI 48326 (US)
(72) Inventor: D'Alessandro, Anthony, Ray Township, MI 48096 (US)
(74) Representative: Richardt, Markus Albert

(57) **Abstract**

A vehicle instrument panel includes: a panel module receiver; and a removable panel module operable to engage and disengage from the panel module receiver in response to user-manipulation, wherein the panel module includes an attachment mechanism operable to permit releasable attachment of at least one user-selectable component.

## Description

### Background of the invention

The present invention relates in general to components for assembly in an automobile body, and in particular to a customized panel module for an instrument panel.

Vehicle instrument panels are typically connected to structural portions of a vehicle and typically present various utilities and conveniences to the driver and one or more passengers (collectively "occupants") in the vehicle. Moreover, instrument panels generally provide an aesthetically pleasing physical and functional interface between the vehicle occupants and the vehicle structural components, and vehicle utilities, respectively.

However, prior art instrument panels generally do not allow for easy interior customization, by a dealer or vehicle owner, and commonly include exposed surfaces, such as on end caps thereof, having poor fit and finish. Such surfaces may generate a public perception of quality drawbacks due the interfacing thereof with surrounding parts.

Accordingly, there is a need in the art for instrument panels providing better perceived quality and which provide users with the ability to customize one or more features thereof.

### Summary of the invention

The invention provides for a vehicle instrument panel as described in independent claim 1 and in dependent claims 2 through 15. In accordance with one or more aspects of the present invention, a vehicle instrument panel includes: a panel module receiver; and a removable panel module operable to engage and disengage from the panel module receiver in response to user-manipulation, wherein the panel module includes an attachment mechanism operable to permit releasable attachment of at least one user-selectable component. The panel module may be, for example, an end cap and/or a center stack.

The panel module receiver includes a recess having first and second spaced apart peripheral edges. First and second attachment mechanisms are disposed at the first and second spaced apart peripheral edges, respectively, and are operable to releasably engage the panel module. The first attachment mechanism may include a channel operable to receive a complementary flange on a first edge of the panel module. The second attachment mechanism may include a clip element operable to engage a complementary clip element on a second edge of the panel module. The first and second peripheral edges may extend at least partially vertically.

Additionally or alternatively, at least one of the first and second attachment mechanisms may include a magnetic element; and at least one of the first and second edges of the panel module may include complementary magnetic elements such that the at least one magnetic element and at least one complementary magnetic element are operable to permit releasable attachment of the panel module to the panel module receiver.

The at least one user-selectable component may include vent covers, storage bins, trim blanks, air registers, decorative attachments, sonic attachments, etc. At least two of the user-selectable components preferably include one or more decorative components so that a user may customize the interior of his or her vehicle. A sonic attachment is a device that generates a selected sound in response to air flowing therethrough.

In one or more embodiments, the panel module is an end cap operable to receive airflow from a duct; and the at least one user-selectable component comprises a vent cover that is operable to block the airflow out of the panel cap.

In one or more embodiments, the at least one user-selectable component is a storage bin operable to receive at least one of: coins, a cup, and a personal electronic device.

The at least one user-selectable component may include an air register that is operable to at least one of: generate a selected air flow pattern; and function as a sonic attachment, thereby further permitting customization of the vehicle by the user.

The attachment mechanism for permitting releasable attachment of the at least one user-selectable component may include at least one detent mechanism. For example, the panel module may includes at least one aperture into which the at least one user-selectable component is received; the aperture may include a peripheral edge; and the at least one user-selectable component may include at least one detent operable to releasably engage at least a portion of the peripheral edge of the aperture.

Other aspects, features, advantages, etc. will become apparent to one skilled in the art when the description of the preferred embodiments of the invention herein is taken in conjunction with the accompanying drawings.

### Brief description of the drawings

For the purposes of illustrating the various aspects of the invention, there are shown in the drawings forms that are presently preferred, it being understood, however, that the invention is not limited to the precise arrangements and instrumentalities shown.
FIG. 1 is a perspective view of a vehicle instrument panel having two end caps and a center stack in accordance with one or more embodiments of the present invention;
FIG. 2 is an exploded perspective view of a type of panel module, an end cap, in proximity to the instrument panel of FIG. 1;
FIG. 3 is a simplified cross-sectional view of the end cap in engagement with the instrument panel of FIG. 1 taken through line 3-3;
FIG. 4 is an exploded, perspective view of an end cap including removable components in accordance with one or more embodiments of the present invention;
FIG. 5 is an exploded, perspective view of an end cap including further removable components in accordance with one or more embodiments of the present invention;
FIG. 6 is a simplified cross-sectional view of the end cap in engagement with the instrument panel of FIG. 1 also taken through line 3-3 but showing a different replaceable component; and
FIG. 7 is a perspective view of an instrument panel showing various removable center stack components in accordance with one or more embodiments of the present invention.

### Detailed description of the preferred embodiments

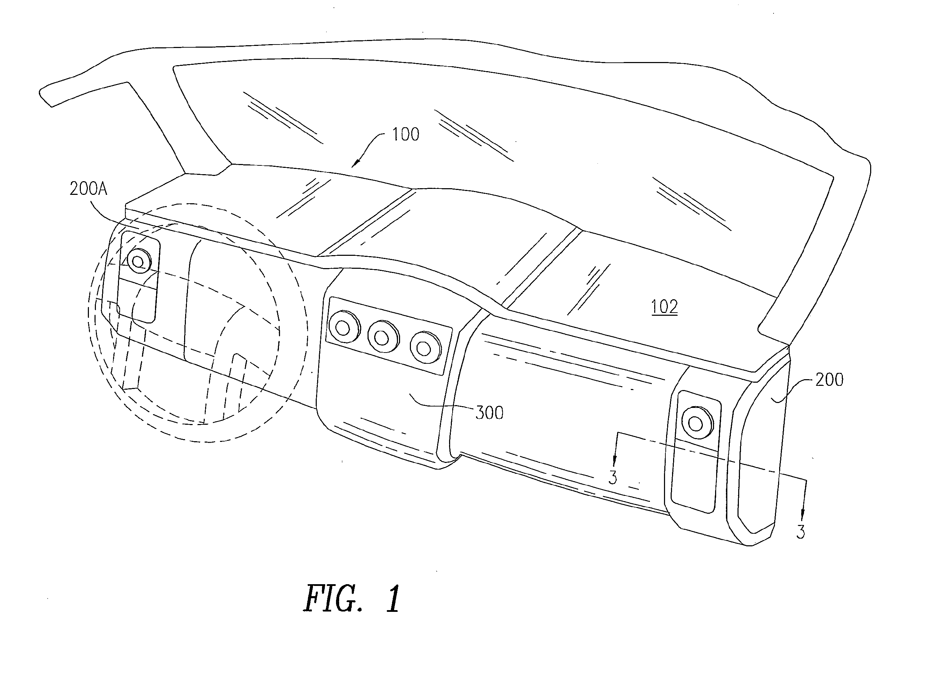

FIG. 1 is a perspective view of a vehicle instrument panel 100 having an instrument panel housing 102, two end caps 200, 200A, and a center stack 300 in accordance with one or more embodiments of the present invention. The end caps 200, 200A, and/or center stack 300 (more generically "panel modules") are removable and replaceable to enable dealers and/or owners of the vehicle to customize portions of the panel modules. This functionality provides one or more user-selected features that are not provided as standard features with the vehicle, and result in a more pleasing, customized appearance to the user.

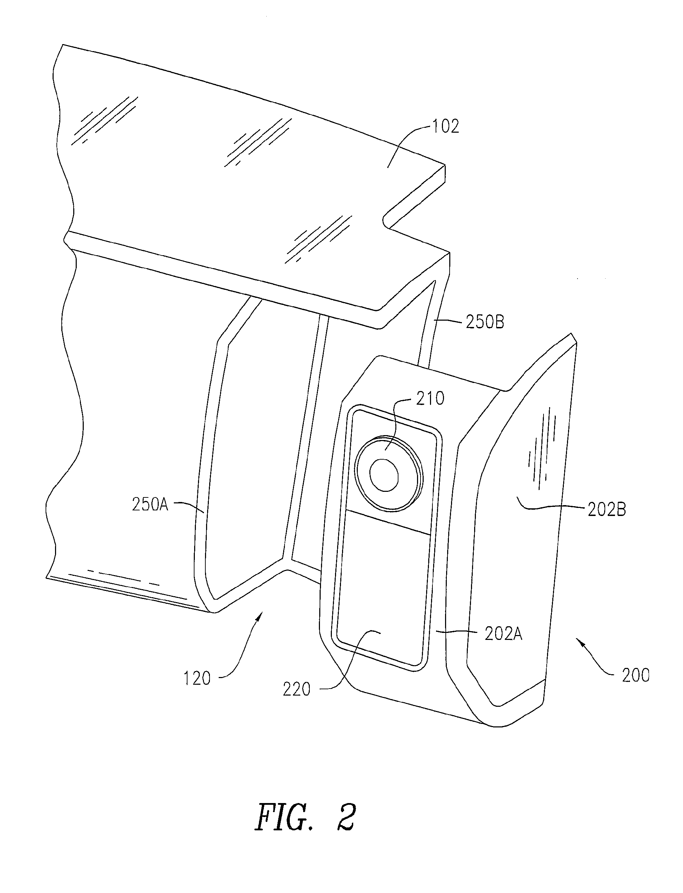

FIG. 2 is an exploded perspective view of the end cap 200, in proximity to the panel housing 102. End cap 200 may include a housing having front side 202A and right side 202B. One or more components, such as air vent (air register) 210, and/or additional component 220 may be disposed in the front side 202A of the housing. The instrument panel housing 102 includes a panel module receiver 120 operable to receive the end cap 200 in such a way as to permit engagement and disengagement of the end cap 200 to/from the panel module receiver 120 in response to user-manipulation.

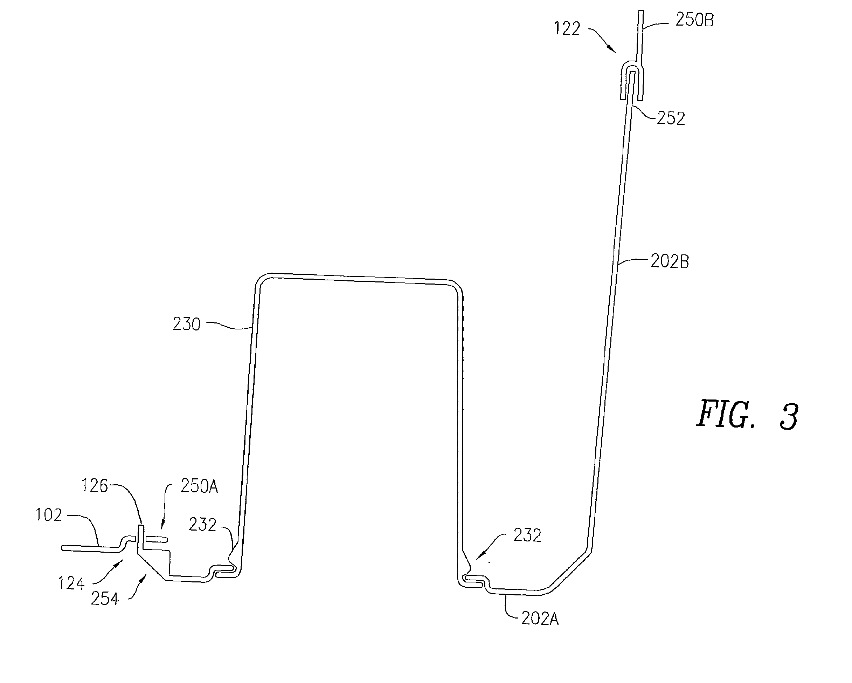

Reference is now made to FIG. 3, which is a simplified cross-sectional view (taken through line 3-3 of FIG. 1) of the end cap 200 in engagement with the instrument panel recess 120. The instrument panel recess 120 includes first and second spaced apart peripheral edges 250A, 250B, the extending at least partially vertically, where first and second attachment mechanisms 122, 124 are disposed at the first and second spaced apart peripheral edges 250A, 250B, respectively. The first and second attachment mechanisms 122, 124 are operable to releasably engage the end cap 200.

In accordance with one or more embodiments, the first attachment mechanism 122 includes a channel operable to receive a complementary flange 252 at a peripheral edge of the side 202B of the end cap 200. The channel preferably permits some vertical sliding, but is sized and shaped to snuggly receive the complementary flange 252. At least one of the channel 122 and the flange 252 preferably includes resilient material to promote the snug fit, reduce vibration noise, and prevent disengagement unless the user intends to remove the end cap 200.

The second attachment mechanism 124 may include a clip element operable to engage a complementary clip element 126 on a second edge 254 of the end cap 200. The clip element 124 may include an aperture sized and shaped to receive the complementary clip element 126 in such a way as to snugly engage same, but permit release when urged apart with sufficient force. Preferably, a plurality of clip elements 124 and complementary clip elements 126 are employed along the first peripheral edge 250A of the panel module receiver 120 and the second edge 254 of the end cap 200, respectively, to insure suitable engagement of the end cap 200 to the receiver 120.

In an alternative embodiment, at least one of the first and second attachment mechanisms 122, 124 include a magnetic element. In such an embodiment at least one of the first and second edges 252, 254 of the end cap 200 include complementary magnetic elements such that the at least one magnetic element and at least one complementary magnetic element are operable to permit releasable attachment of the end cap to the panel module receiver 120.

The attachment of end cap 200 to instrument panel housing 102 in accordance with one embodiment of the invention may be achieved as follows: end cap 200 may initially be detached from instrument panel housing 102 and withdrawn therefrom along a fore-aft axis within a vehicle (in the direction of a hypothetical passenger in the view of FIG. 2). End cap 200 may then be advanced toward instrument panel housing 102 along the fore-aft axis of the vehicle and engage instrument panel housing 102. End cap 200 may engage housing 102 at 122 which preferably secures edge 252 of end cap 200, and at 124 which preferably also secures edge 254 to the receiver 120.

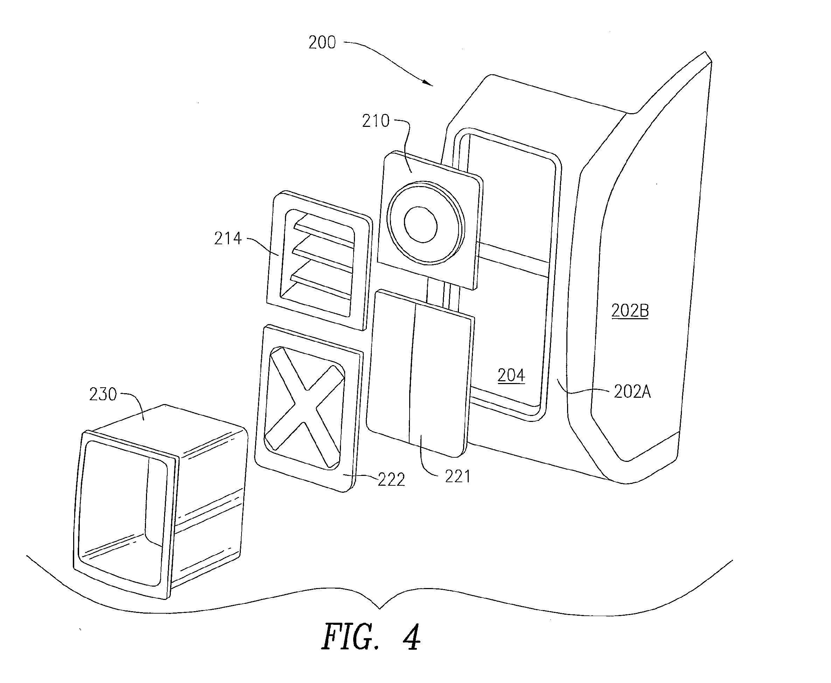

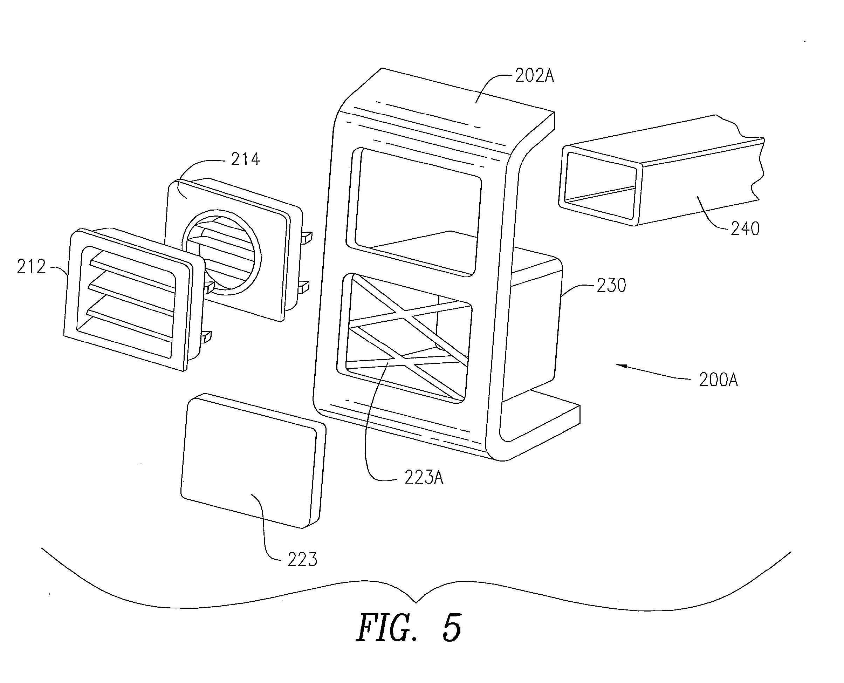

FIGS. 4 and 5 are exploded, perspective views of end caps 200, 200A, respectively, in accordance with one or more further embodiments of the present invention. While the end cap 200 of FIG. 4 is substantially the same as the end cap 200 of FIGS. 1-2, the end cap 200A of FIG. 5 does not include the side 202B, and thus is suited for connection to the instrument panel housing 102 at an intermediate position, not an extreme end.

The end caps 200, 200A (hereinafter end cap 200 will be referred to alone, the applicability to end cap 200A being understood) includes an attachment mechanism operable to permit releasable attachment of at least one user-selectable component, such as: vent covers, storage bins, trim blanks, air registers, decorative attachments, and/or sonic attachment. As shown in FIG. 4, the housing of the end cap 200 is operable to receive air register 210 (or alternatively air register 214), trim blank 222 (or alternatively trim blank 221), and/or bin 230. Thus, one feature of end cap 200 is the ability to attach different user-selectable components to a common end cap housing in order to customize the interior of the vehicle in accordance with user preferences.

For example, in the embodiment of FIG. 2, the combination of trim blank 221 and air register 210 results in a first configuration. Alternatively, the bin 230 could be used instead of the trim blank 221 and/or the style of air register may be changed by substituting air register 214 or 212 (FIG. 5). Further configurations are possible, such as employing a bin door 223 in combination with bin door 230, such that the interior of the bin 230 may be closed. In a further configuration, the bin door 223 in combination with buckles (e.g. elastic) 223A may be employed such that the interior of the bin 230 may be closed.

In accordance with one or more embodiments, at least two of the user-selectable components include one or more differing decorative components, such as the trim blanks 221, 222, which provides the user with further aesthetic choices.

The trim blank may be attached to end cap 200 to avoid any unsightly openings or inconsistencies in the appearance or geometry of end cap 200.

As shown in FIG. 5, the end cap 200 is operable to receive airflow from a duct 240. In operation, the airflow from the duct is directed to the air registers 210, 212, and/or 214. In one or more embodiments, a vent cover or a trim blank 221, 222 may be employed to cut off the airflow through the duct into the vehicle.

One or more of the air registers 210, 212, and/or 214 may include apertures and/or additional mechanisms that generate a selected air flow pattern, which may be fixed or adjustable. In alternative embodiments, the airflow apertures may be sized and shaped to generate a particular sound in response to air flowing therethrough. Such a sonic user selectable component provides a desired sonic effect while simultaneously enabling a user to customize an aspect of end cap 200 relating to a feature other than appearance.
The storage bin 230 may be sized and shaped to accommodate any number of personal items, such as coins, a cup, a personal electronic device, a personal device, such as a key chain, a cell phone, a personal digital assistant, other electronic devices, etc.

User selectable components for attachment to end cap 200 or center stack (300) in addition to those discussed thus far may also be used, which may include vendor supplied devices available with different features, and/or user supplied components that are customized in accordance with user preferences. Additional selectable components could take a variety of different forms. Two concrete examples would be electronic devices and additional instruments for the vehicle. A few examples of possible electronic devices could include: a clock, a navigation system, a personal entertainment system, an audio component such as a speaker, a radio communication device, a video screen, a wireless telephone, or a computer system. A few examples of possible vehicle instruments that could be added could include: a tachometer, a collision avoidance and/or warning system, a device for displaying vehicle status or condition, device for displaying fuel economy, a device for displaying engine status. In the case of hybrid or electric vehicles, a module for displaying the condition and/or status of a battery or fuel cell could also be added.

With reference to FIGS. 3 and 4, the user component, for example, bin 230, may include protrusions 232 to enable a detent mechanism to be employed for releasably attaching the user-selected component to couple to the housing of the end cap 200. The panel module, the end cap 200, includes at least one aperture 204 into which the at least one user-selectable component (bin 230) is received. The aperture 204 includes a peripheral edge. The protrusions 232 of the bin 230 are operable to releasably engage at least a portion of the peripheral edge of the aperture 204. During insertion of the bin 230 into the end cap 200, the bin 230 is advanced toward end cap 200 such that protrusions 232 engage the peripheral edge of the aperture 204. The bin 230 may respond to the engagement by having the sides thereof deflect toward one another in response to the protrusions 232 riding over the inner peripheral edge of the aperture 204. Further advancement of user device 230 into end cap 200 preferably enables the sides of the bin 230 to expand outward again as the notch below protrusions 232 engages the respective peripheral edge of the aperture 204, causing the bin 230 to come to rest in a stable position with respect to end cap 200.

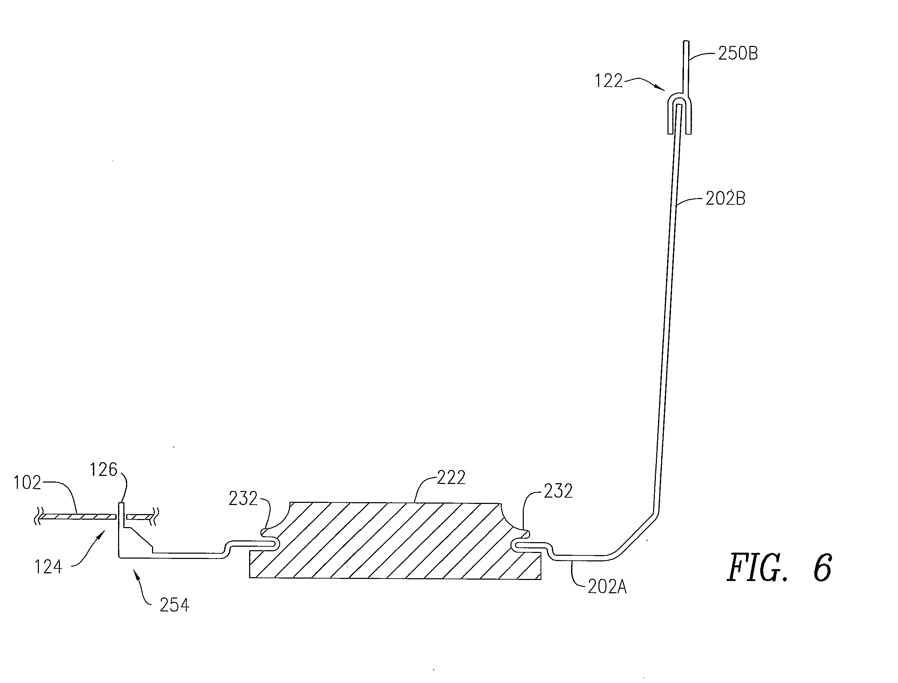

FIG. 6 is a simplified cross-sectional view of the end cap 200 in engagement with the instrument panel 100, which is also taken through line 3-3, but shows a different replaceable component than the bin 230, i.e., a trim blank 222. The engagement of the trim blank 222 to end cap 200 is substantially the same as that of the bin 230, discussed above, and therefore will not be repeated here. The trim blank 222 is preferably configured to conform to the geometry of adjacent portions of end cap 200 and instrument panel 100 to avoid presenting any unsightly protrusions or inconsistencies. Trim blank 222 may also be configured to match the aesthetic characteristics of nearby portions of end cap 200 and instrument panel 100. If or when desired, trim blank 222 (or any other component 220) may be removed and replaced with another user device to fulfill a particular function or create a desired aesthetic effect.

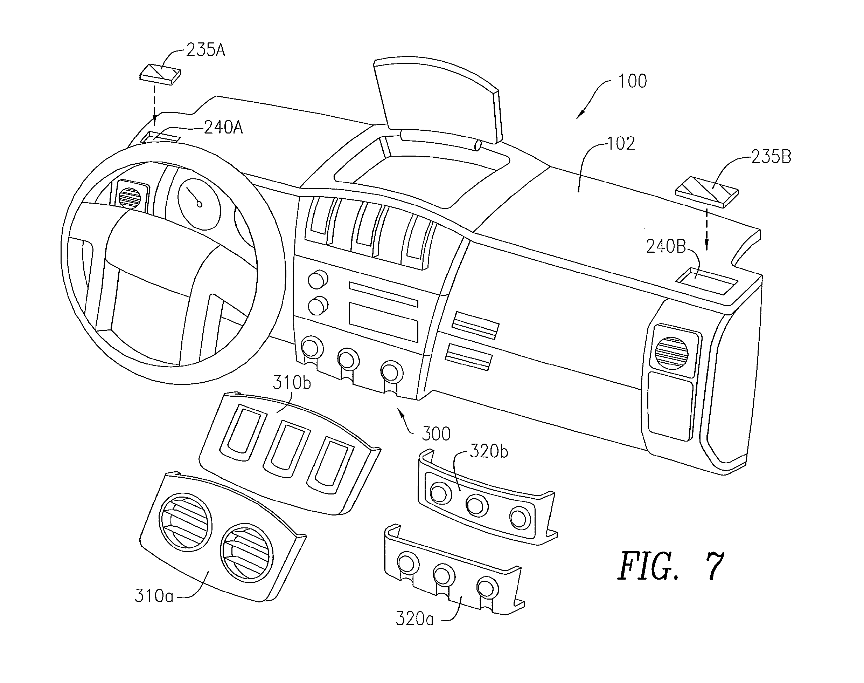

With reference to FIG. 7, instrument panel 100 may include an instrument panel housing 102 that is operable to include a center stack 300 that accommodates user-selectable components that are removably attachable thereto. Various center stack 300 components may be attached to the center stack 300 of the instrument panel housing 102 in accordance with one or more embodiments of the present invention. While a limited number of types of user-selectable components are discussed herein, for the sake of brevity and clarity, many such components (supplied by an automobile manufacturers or after-market suppliers) are possible without departing from the invention herein. In one or more embodiments, center stack 300 may include air register 310, selectable from among a plurality of components, such as air register 310a and air register 310b. Center stack 300 may additionally or alternatively include heating, ventilation, and air conditioning (HVAC) control 320, also selectable from among a plurality of components, such as HVAC control 320a and HVAC control 320b. In this embodiment, center stack 300 may include any combination of either of air registers 310a and 310b, and either of HVAC controls 320a and 320b. Thus, four possible combinations of the above-discussed parts are available for user selection.

Additional user-selectable components 235A, 235B, such as vent covers, storage bins, trim blanks, air registers, decorative attachments, and/or sonic attachments, may be releasably attached to the instrument panel housing 102 by way of further apertures 240A, 240B.

The specific mechanisms for attaching and removing the user-selectable components for the center stack 300 and/or further apertures 240A, 240B of the instrument panel housing 102 are taken from the other panel module, end cap 200, discussed above, which a skilled artisan would readily understand may be applied to the center stack context. Accordingly such details are not repeated here.

## Claims

1. A vehicle instrument panel (100), comprising:
a panel module receiver (120); and
a removable panel module (200, 200A, and 300) operable to engage and disengage from the panel module receiver (120) in response to user-manipulation,
wherein the panel module (200, 200A, and 300) includes an attachment mechanism (122 and 124) operable to permit releasable attachment of at least one user-selectable component (220).

2. The vehicle instrument panel (100) of claim 1, wherein the panel module is one of an end cap (200 or 200A) and a center stack (300).

3. The vehicle instrument panel (100) of claim 1 or 2, wherein:
the panel module is an end cap (200 or 200A);
the panel module receiver (120) includes a recess including first (122) and second (124) spaced apart peripheral edges; and
first (122) and second (124) attachment mechanisms at the first (250A) and
second (250B) spaced apart peripheral edges, respectively, are operable to releasably engage the panel module (200 or 200A).

4. The vehicle instrument panel (100) of claim 3, wherein:
the first attachment mechanism (122) includes a channel operable to receive a complementary flange (252) on a first edge (252) of the panel module (200 or 200A); and
the second attachment mechanism includes a clip element (124) operable to engage a complementary clip element (126) on a second edge (254) of the panel module.

5. The vehicle instrument panel (100) of claim 3 or 4, wherein the first (250A) and second (250B) peripheral edges extend at least partially vertically.

6. The vehicle instrument panel (100) of claim 3, 4, or 5 wherein:
at least one of the first (122) and second (124) attachment mechanisms include a magnetic element; and
at least one of the first (202B) and second (254) edges of the panel module (200 or 200A) include complementary magnetic elements such that the at least one magnetic element and at least one complementary magnetic element are operable to permit releasable attachment of the panel module (200 or 200A) to the panel module receiver (120).

7. The vehicle instrument panel (100) of any one of the proceeding claims, wherein the at least one user-selectable component is taken from the group consisting of: vent covers, storage bins (230), trim blanks (221 and 222), air registers (210, 212, and 214), decorative attachments, and/or sonic attachments.

8. The vehicle instrument panel (100) of any one of the proceeding claims, further comprising, a set of user-selectable components, at least two of which including one or more decorative components.

9. The vehicle instrument panel (100) of any one of the proceeding claims, wherein:
the panel module is an end cap (200 or 200A) or a center stack (300) operable to receive airflow from a duct (240); and
the at least one user-selectable component comprises a vent cover that is operable to block the airflow out of the panel cap.

10. The vehicle instrument panel (100) of any one of the proceeding claims, wherein the at least one user-selectable component is a storage bin (230) operable to receive at least one of: coins, a cup, and a personal electronic device.

11. The vehicle instrument panel (100) of any one of the proceeding claims, wherein the at least one user-selectable component comprises an air register (210, 212, or 214) that is operable to at least one of:
generate a selected air flow pattern; and
function as a sonic attachment.

12. The vehicle instrument panel (100) of any one of the proceeding claims, wherein the attachment mechanism (122 and 124) for permitting releasable attachment of the at least one user-selectable component (220) includes at least one detent mechanism (232).

13. The vehicle instrument panel (100) of any one of the proceeding claims, wherein:
the panel module includes at least one aperture (204) into which the at least one user-selectable component (220) is received;
the aperture (204) includes a peripheral edge; and
the at least one user-selectable component includes at least one detent (232) operable to releasably engage at least a portion of the peripheral edge of the aperture (204).

14. The vehicle instrument panel (100) of any one of the proceeding claims, wherein the at least one user-selectable component contains and electronic device such as: a clock, a navigation system, a personal entertainment system, a audio component such as a audio speaker, a radio communication device, a video screen, a wireless telephone, and/or a computer system.

15. The vehicle instrument panel (100) of any one of the proceeding claims,
wherein the at least one user-selectable component contains a vehicle instrument such as: a tachometer, a collision avoidance and/or warning system, a night vision imaging system, an interface to the onboard computer systems of the vehicle, device for displaying vehicle status or condition, a device for displaying engine status, and/or a device for displaying the battery or fuel cell condition and/or status.
